# EUROPEAN PATENT APPLICATION

(11) **EP 2 529 904 A2**
(43) Date of publication of application: **05.12.2012**
(21) Application number: 10844811.9
(22) Date of filing: 03.12.2010
(51) Int. Cl.: B26D 3/06, B27C 5/00, B27F 1/00

(54) **GROOVE PROCESSING APPARATUS**

(30) Priority: 24.06.2010 KR 20100060059; 26.01.2010 KR 20100007052
(71) Applicant: Park, Young Keun, Gyeonggi-do 415-802 (KR)
(72) Inventor: Park, Young Keun, Gyeonggi-do 415-802 (KR)
(74) Representative: Freeman, Avi
(86) International application number: PCT/KR2010/008639
(87) International publication number: WO 2011/093587

(57) **Abstract**

Disclosed herein is a groove processing apparatus of processing a groove having a triangular cross section in a side of a plate material, the groove processing apparatus including: a cutting member cutting the side of the plate material; a first driving part moving the cutting member to first and second positions; and a second driving part moving the cutting member in groove processing directions of the plate material, wherein the first position corresponds to any one of the two sides of the triangular shape having the same vertex and the second position corresponds to the other thereof, the vertex being positioned inside the plate material.

## Description

### [Technical Field]

The present invention relates to a groove processing apparatus, and more particularly, to a groove processing apparatus capable of easily processing grooves having various angles and a triangular cross section in a side of a plate material.

### [Background Art]

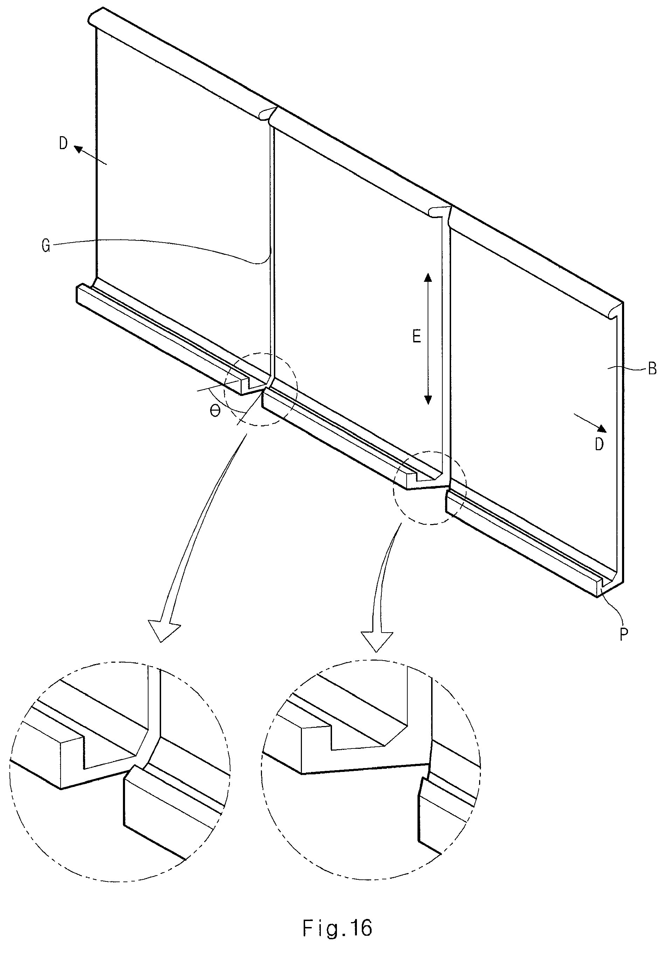

There are various reasons why a groove is processed in a side of a plate material. For example, in order to accurately and easily bend a metal plate material at a predetermined angle, the groove may be processed in a side of the plate material in a height direction (See E of FIG. 16) of the plate material in advance before the plate material is bent. That is, as shown in FIG. 16, a groove (See G of FIG. 16) having a triangular cross section is formed in advance in a side of a plate material B and the plate material B is bent along the groove, thereby making it possible to more accurately and easily bend the plate material B. Alternative, a groove having a rectangular cross section may be formed in advance in the side of the plate material in order to couple another plate material to the plate material in a T shape.

Meanwhile, as shown in FIG. 16, the metal plate material B may include a flange part P formed at an upper portion or a lower portion thereof and extended in a direction vertical to the side thereof in order to be coupled to another member. In the case in which the flange part P is formed, it may become difficult to bend the plate material B due to interference of the flange part P when the plate material B is bent. Therefore, it is required to process a groove even in the flange part P in advance. In this case, in order to prevent the flange part P from interfering with the bending of the plate material B, an angle (See θ of FIG. 16) formed by two sides of a triangle should increase as a bending angle of the plate material B increases. However, since a single cutting tool may form only a groove having a predetermined shape, an appropriate cutting tool should be replaced every time according to a bending angle of the plate material. This problem is further intensified in the case in which metal plate materials B having a thin band shape are continuously provided in a length direction (See D of FIG. 16) and grooves having various angles and a triangular shape are continuously processed in a side of the plate material.

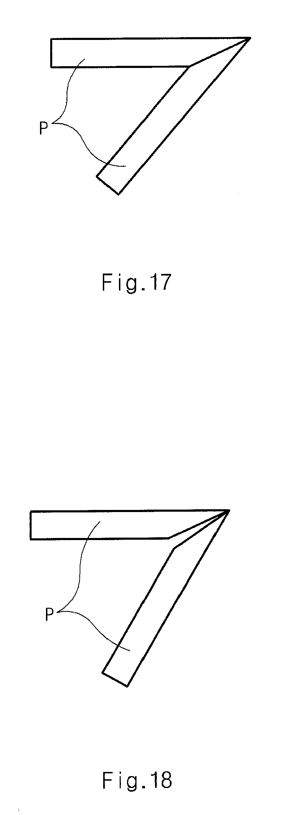

Further, since a shape of the groove that may be processed in the side of the plate material B including the flange part P is limited even though various cutting tools are used, in the case of configuring a channel signboard, or the like, by bending the plate material B, light in the channel signboard is exposed to the outside, such that an appearance of the channel signboard may be poor. Describing this in detail, for example, when it is assumed that angles (See θ of FIG. 16) of grooves capable of being processed using three cutting tools are 30°, 50°, and 70° and a required bending angle of a plate material is 50°, in the case in which the groove is processed using a cutting tool capable of processing a groove having an angle of 50°, the plate material may be bent so that the flange parts P are not overlapped with each other and light is not leaked, as shown in FIG. 17. Meanwhile, when it is assumed that the required bending angle of the plate material is 60°, in the case in which the groove is processed using the cutting tool capable of processing the groove having the angle of 50°, since the flange parts P are overlapped with each other, a cutting tool capable of processing an groove having an angle of 70° can not but be used. However, when the groove is processed using this cutting tool, the internal light can not be exposed to the outside through a gap between the flange parts P after bending the plate material, as shown in FIG. 18.

### [Technical Problem]

Accordingly, the present invention has been made to solve the above-mentioned problems occurring in the prior art while advantages achieved by the prior art are maintained intact.

One object to be achieved by the present invention is to provide a groove processing apparatus capable of easily processing grooves having various angles and a triangular cross section in a side of a plate material.

### [Technical Solution]

In one aspect of the present invention, there is provided a groove processing apparatus of processing a groove having a triangular cross section in a side of a plate material, the groove processing apparatus including: a cutting member cutting the side of the plate material; a first driving part moving the cutting member to first and second positions; and a second driving part moving the cutting member in groove processing directions of the plate material, wherein the first position corresponds to any one of the two sides of the triangular shape having the same vertex and the second position corresponds to the other thereof, the vertex being positioned inside the plate material.

The cutting member may cut the side of the plate material so as to correspond to any one of the two sides of the triangular shape during a process in which it moves in the groove processing directions of the plate material by the second driving part, and the second driving part may reciprocate the cutting member in the groove processing directions of the plate material at the first position and reciprocate the cutting member in the groove processing directions of the plate material at the second position or move the cutting member in any one of the groove processing directions of the plate material at the first position and move the cutting member in the other direction of the groove processing directions of the plate material at the second position.

The second driving part may include a driving shaft having one end portion directly or indirectly connected to the cutting member and a driving shaft driving part reciprocating the driving shaft in the groove processing direction of the plate material.

The first driving part may rotate the cutting member based on the rotation center present on an extension line of the vertex to move the cutting member to the first and second positions.

The first driving part may include a rotating body rotated based on the rotation center present on the extension line of the vertex, a driving body transferring rotational force to an outer surface of the rotating body to rotate the rotating body, and a connecting shaft directly or indirectly connecting the rotating body and the cutting member to each other, and the cutting member may be rotated together with the connecting shaft according to the rotation of the rotating body.

In one aspect of the present invention, there is provided a groove processing apparatus of processing a groove having a triangular cross section in a side of a plate material, the groove processing apparatus including: a cutting member cutting the side of the plate material; a first driving part rotating the cutting member around an axis parallel to groove processing directions of the plate material; and a second driving part moving the cutting member in the groove processing directions of the plate material, wherein the first driving part moves the cutting member to first and second positions corresponding to two sides of the triangular shape having the same vertex, and the cutting member cuts the side of the plate material while moving in the groove processing directions of the plate material by the second driving part at the first and second positions.

The first driving part may include a rotating body rotated around the axis parallel with the groove processing directions of the plate material, a driving body rotating the rotating body, and a connecting body connecting the rotating body and the cutting member to each other and rotated together with the rotating body.

The groove processing apparatus may further include a support part guiding the plate material in a predetermined direction and supporting the plate material during a process of cutting the plate material; and a guide part provided at one side of the support part to guide the movement of the cutting member in the groove processing directions.

The guide part may include a frame provided at one side the support part and a slider moving along the frame in the groove processing direction of the plate material, the first driving part may include a rotating body connected to the slider and rotated based on the axis parallel to groove processing directions of the plate material and a connecting body connecting the rotating body and the cutting member to each other and rotated together with the rotating body and be movable together with the slider in the groove processing directions of the plate material, and the second driving part may include a driving shaft having one end portion connected to the slider and a driving shaft driving part installed at the frame to reciprocate the driving shaft in the groove processing directions of the plate material.

The groove processing apparatus may further include a cutting member driving part provided at the connecting body to move together with the connecting body and driving the cutting member.

The groove processing apparatus may further include a third driving part moving the rotation center of the cutting member in a direction vertical to the side of the plate material to control a depth of the groove formed in the side of the plate material.

### [Advantageous Effects]

Since the groove processing apparatus according to the exemplary embodiments of the present invention may process the groove having various angles and a triangular cross section in the side of the plate material only with a single cutting member, a groove having an optimal shape according to a bending angle of the plate material may be processed in the side of the plate material and a gap may not be generated between flange parts after bending the plate material even though the flange parts are formed in the side of the plate material.

### [Description of Drawings]

The above and other objects, features and advantages of the present invention will be more apparent from the following detailed description taken in conjunction with the accompanying drawings, in which:
FIG. 1 is a perspective view of a groove processing apparatus according to a first exemplary embodiment of the present invention;
FIG. 2 is a perspective view showing main components of the groove processing apparatus of FIG. 1 when a cutting member is positioned at a first position;
FIG. 3 is a perspective view showing the main components of the groove processing apparatus of FIG. 1 when the cutting member is positioned at a second position;
FIG. 4 is a plan view of the groove processing apparatus of FIG. 2;
FIG. 5 is a plan view of the groove processing apparatus of FIG. 3;
FIG. 6 is a partially enlarged view showing a modified example of disposition of the cutting member;
FIG. 7 is a perspective view showing components of a groove processing apparatus according to a second exemplary embodiment of the present invention when a cutting member is positioned at a first position;
FIG. 8 is a perspective view showing the components of the groove processing apparatus of FIG. 7 when the cutting member is positioned at a second position;
FIG. 9 is a perspective view of a groove processing apparatus according to a third exemplary embodiment of the present invention;
FIG. 10 to 12 are perspective views stepwise showing an operation structure of the groove processing apparatus of FIG. 9;
FIG. 13 is a perspective view describing a case in which the groove processing apparatus of FIG. 9 processes another side of a plate material;
FIG. 14 is a perspective view showing main components of the groove processing apparatus of FIG. 13;
FIG. 15 is a cross-sectional view of conceptually showing a function of a third driving part in the groove processing apparatus of FIG. 9;
FIG. 16 is a perspective view showing a plate material having a groove formed in a side thereof;
FIG. 17 is a bottom view showing a case in which a gap is not generated between flange parts after a plate material is bent; and
FIG. 18 is a bottom view showing a case in which a gap is generated between flange parts after a plate material is bent.

### [Best Mode]

Hereinafter, exemplary embodiments of the present invention will be described in detail with reference to the accompanying drawings. However, the present invention is not limited to these exemplary embodiments. For reference, the same reference numerals will be used to describe substantially the same components. Under this rule, a description may be provided while citing a content shown in other drawings. A content well-known to those skilled in the art to which the present invention pertains or a repeated content may be omitted.

### First Exemplary Embodiment

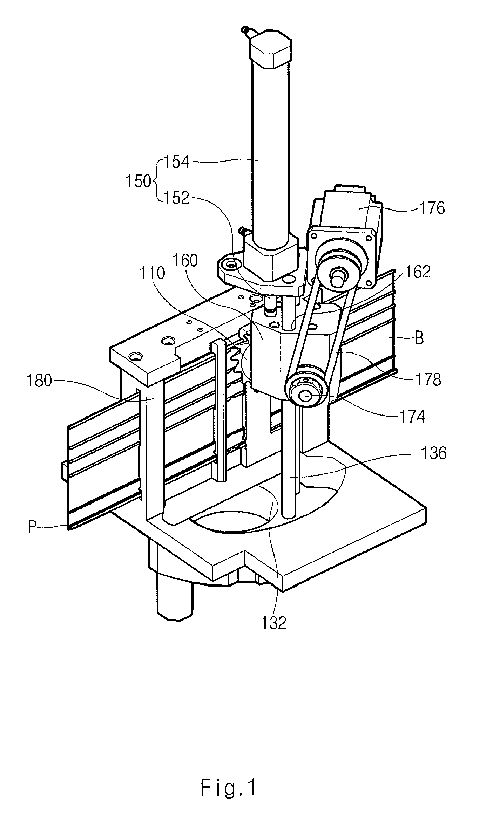

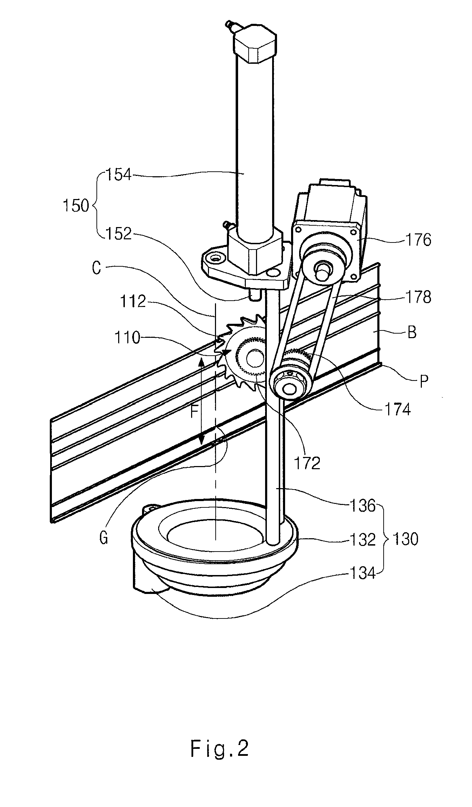

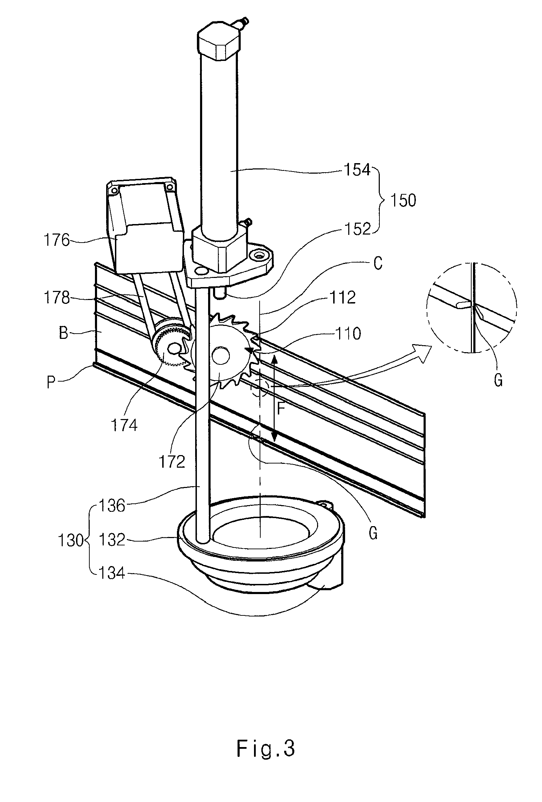

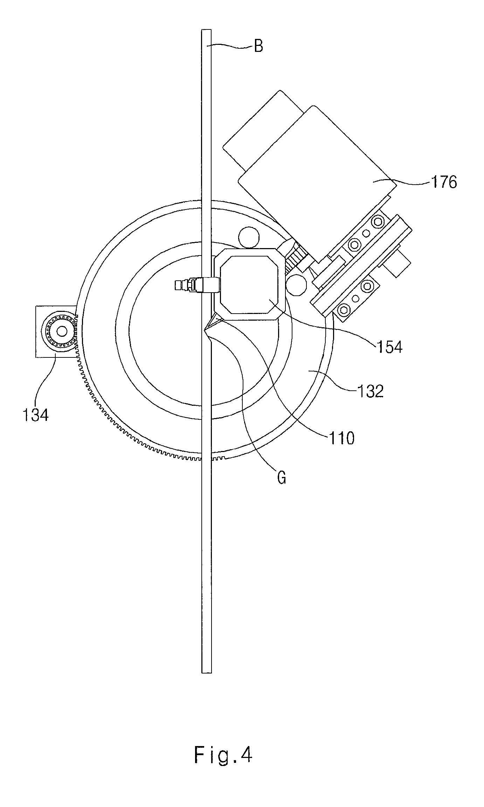

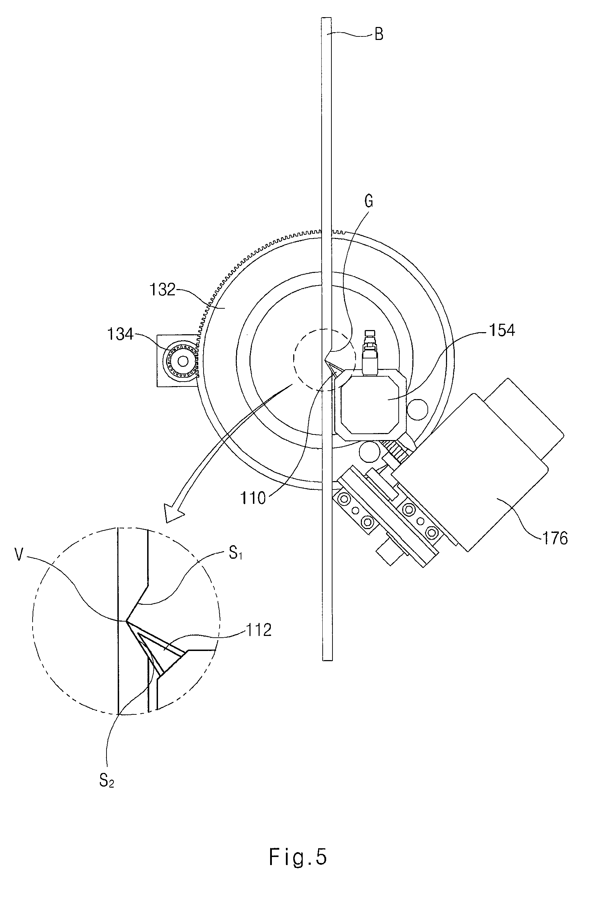

FIG. 1 is a perspective view of a groove processing apparatus according to a first exemplary embodiment of the present invention; FIG. 2 is a perspective view showing main components of the groove processing apparatus of FIG. 1 when a cutting member is positioned at a first position; and FIG. 3 is a perspective view showing the main components of the groove processing apparatus of FIG. 1 when the cutting member is positioned at a second position. In addition, FIG. 4 is a plan view of the groove processing apparatus of FIG. 2; and FIG. 5 is a plan view of the groove processing apparatus of FIG. 3. As shown in FIGS. 1 to 3, the groove processing apparatus according to the present embodiment may be configured to include a cutting member 110, a first driving part 130, and a second driving part 150.

The cutting member 110 has a cutting blade 112 formed in a circumferential direction to cut a side of a plate material B by rotation. That is, as shown in FIGS. 2 and 3, the cutting member 110 includes the cutting blade 112 formed on the outer surface thereof in the circumferential direction. The cutting member 110 is rotatably received in a case 160 as shown in FIG. 1. Here, it is preferable that the cutting member 110 is exposed to the outside of the case 160 enough to cut the side of the plate material B.

In order to rotate the cutting member 110, the groove processing apparatus according to the present embodiment is provided with a first gear 172, a second gear 174, and a cutting member driving part 176. An outer surface of the first gear 172 provided at a side of the cutting member 110 and rotated together with the cutting member 110 is provided with gear teeth in a direction parallel with a direction perpendicular to the cutting member 110 at the rotation center of the cutting member 110 as shown in FIG. 2. Further, in order to rotate the first gear 172, one end portion of the second gear 174 is provided with gear teeth engaged with the gear teeth of the first gear 172. The second gear 174 is connected to the cutting member driving part 176 at the other end portion thereof by a belt 178, wherein the cutting member driving part 176 is configured of a motor, or the like, to generate rotational force.

According to this configuration, when the rotational force is generated in the cutting member driving part 176, it may be transferred to the belt 178, the second gear 174, and the first gear 172 to rotate the cutting member 110. When the groove processing apparatus includes the first and second gear 172 and 174 as described above, the cutting member 110 may be easily replaced. However, the second gear 174 and the cutting member driving part 176 are not limited to be connected to each other by the belt. For example, the cutting member driving part may be provided with gear teeth engaged with the gear teeth of the second gear. Therefore, the rotational force may also be transferred by engagement between the gear teeth. Alternatively, the cutting member driving part may directly rotate the second gear.

The cutting member 110 may move to first and second positions by the first driving part 130 and move in a groove processing direction F of the plate material by the second driving part 150. The movement of the cutting member 110 to the first and second positions and in the groove processing direction F of the plate material is to process a groove G having a triangular cross section in the side of the plate material B including a flange part P. Describing this in detail, when each of portions corresponding to two sides S₁ and S₂ of a triangular shape having the same vertex V is cut in the groove processing direction F of the plate material as shown in FIG. 5, a groove G having a triangular cross section may be formed in the side of the plate material B. That is, when a portion of the plate material corresponding to any one side (for example, S) of the two sides S₁ and S₂ of the triangular shape having the same vertex V is cut in the groove processing direction F of the plate material and a portion of the plate material corresponding to the other side (S₂) thereof is then cut in the groove processing direction F of the plate material, a chip having a shape similar to a triangular prism may be removed from the side of the plate material B. Meanwhile, in the case in which a size of the groove G formed in the side of the plate material B is significantly small, a form in which a portion of the chip is removed whenever the cutting is performed in a process of processing the groove may be taken. However, more specifically, a form in which the portions of the plate material corresponding to the two sides of the triangular shape are cut may be taken.

For reference, the groove processing direction F of the plate material generally means a height direction (See E of FIG. 16) of the plate material B. The reason whey the groove G is processed in the side of the plate material B is generally to easily and accurately bend the plate material B. Therefore, the groove G is generally processed in the height direction of the plate material B. However, the groove processing direction F of the plate material is not limited to the height direction of the plate material B as described above. As a result, the groove processing direction F of the plate material means a direction in which the groove G is formed based on the side of the plate material B. Therefore, the groove processing direction may be implemented to be various directions such as a vertical direction, a horizontal direction, or the like, according to how to configure the groove processing apparatus according to the present embodiment. However, in the present embodiment, both of the upward and downward directions will be described as the groove processing direction F, as shown in FIGS. 1 to 5.

In order to perform the above-mentioned operation, in the groove processing apparatus according to the present embodiment, the first driving part 130 moves the cutting member 110 to the first and second positions. Here, the first position indicates a position corresponding to any one (for example, S₁) of the two sides S₁ and S₂ of the triangular shape having the same vertex V, and the second position indicates a position corresponding to the other (for example, S₂) thereof. Further, in order to remove the chip having the shape similar to the triangular prism through the above-mentioned operation, the vertex V should be positioned inside the plate material B. The first and second positions may be variously changed according to a specific shape of the groove G to be processed. That is, the first and second positions may be variously selected according to how to determine an angle formed by the two sides S₁ and S₂ described above, or the like.

The first driving part 130 may include a rotating body 132, a driving body 134, and a connecting shaft 136, as shown in FIGS. 2 to 5. The rotating body 132 is rotated based on the rotation center present on an extension line C of the vertex V described above. In order to rotate the rotating body 132, the driving body 134 transfers rotational force to an outer surface of the rotating body 132. As an example, the outer surface of the rotating body 132 may be provided with gear teeth, and an outer surface of the driving body 134 may also be provided with gear teeth engaged with the gear teeth of the rotating body 132.

However, the rotational force is not transferred only by engagement between the gear teeth, but may also be transferred by configuring the rotating body and the driving body in a pulley form and connecting the rotating body and the driving body to each other by a belt. In addition, the connecting shaft 136 connects the rotating body 132 and the cutting member 110 to each other so that the cutting member 110 may also be rotated according to the rotation of the rotating body132. This connection may be directly or indirectly made. For example, as shown in FIG. 1, in the groove processing apparatus according to the present embodiment, since the case 160 in which the cutting member 110 is received and the connecting shaft 136 are connected to each other, the cutting member 110 and the connecting shaft 136 are indirectly connected to each other. Hereinafter, both of the direct connection and the indirect connection through another component will be represented by 'connection'.

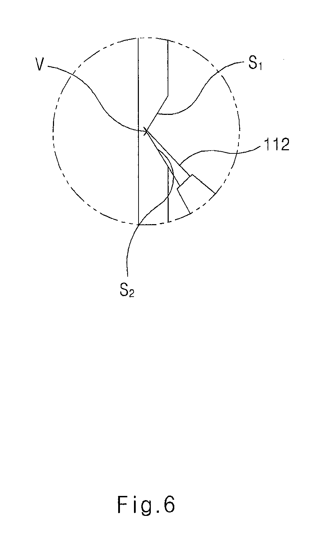

Meanwhile, in order to process the groove G having the triangular cross section, it is ideal that the cutting member 110 cuts the side of the plate material B in a state in which a distal end thereof (as a result, a distal end of the cutting blade) contacts the vertex V (as a result, the rotation center of the cutting member), as shown in FIG. 5. However, in order to more certainly remove the chip having the triangular prism shape, the cutting member 110 may also cut the side of the plate material B in a state in which the distal end thereof a point positioned inside the vertex V. That is, it is ideal that the cutting member 110 is disposed so that the distal end thereof may contact the vertex V. However, as shown in FIG. 6, the cutting member 110 may also be disposed so that the distal end thereof contacts the point inside the vertex V. As a result, it is preferable that the distal end of the cutting member 110 toward the plate material B is extended up to the vertex V.

As described above, the cutting member 110 may move to the first or second position by the first driving part 130 and then move in the groove processing direction F of the plate material by the second driving part 150. The plate material B may be actually cut during the movement of the cutting member 110 by the second driving part 150. That is, the above-mentioned cutting member 110 may cut the side of the plate material B so as to correspond to any one of the two sides S₁ and S₂ of the triangular shape described above during the movement in the groove processing direction F of the plate material by the second driving part 150. The cutting member 110 may reciprocate at each of the first and second positions or move in different directions in the first and second positions, by the second driving part 150.

Describing this in detail, the above-mentioned cutting member 110 may move to the first position by the first driving part 130, move downwardly while cutting the side of the plate material B at the first position by the second driving part 150, and then move upwardly again at the same first position. Then, the cutting member 110 may move the second position by the first driving part 130 and then reciprocate again in a vertical direction. In the case in which the cutting member 110 moves upwardly at the second position, since the possibility that the chip having the triangular prism shape would be already removed is high, the cutting may not be actually made. Here, the upward movement of the cutting member 110 means that the cutting member 110 returns to its original position. Unlike this, the cutting member 110 may also move to the first position by the first driving part 130, move downwardly while cutting the side of the plate material B at the first position by the second driving part 150, move to the second position by the first driving part 130, and then move upwardly while cutting the side of the plate material B by the second driving part 150.

In order to implement this vertical movement, the second driving part 150 may include a driving shaft 152 having one end portion connected to the case 160 and a driving shaft driving part 154 reciprocating the driving shaft 152 in the groove processing direction F of the plate material. Since the cutting member 110 according to the present embodiment should be capable of performing both of the vertical movement and the rotation movement, the case 160 in which the cutting member 110 is received should not only be capable of being rotated together with the above-mentioned connecting shaft 136 but also be capable of moving vertically by the above-mentioned driving shaft 152. To this end, the case 160 is provided with a hole 162 through which the connecting shaft 136 may penetrate as shown in FIG. 1. As a result, the case 160 may be connected to a lower end portion of the driving shaft 152 to maintain its position in the vertical direction, and may move downwardly along the connecting shaft 136 when the driving shaft 152 moves downwardly. In addition, when the connecting shaft 136 is rotated around the rotation center present on the extension line C of the vertex V described above, the case 160 may also be rotated together with the connecting shaft 136. At this time, the second driving part 150 may also be rotated together with the case 160.

In the groove processing apparatus according to the present embodiment, the driving shaft 152 may be indirectly connected to the cutting member 110 through the case 160. However, the driving shaft may also be directly connected to the cutting member according to a kind of cutting member. Further, in the groove processing apparatus according to the present embodiment, the driving shaft driving part 154 is configured in a cylindrical shape. However, a configuration of the driving shaft driving part is not limited thereto. For example, even though the driving shaft is configured in a rack shape and the driving shaft driving part is configured in a pinion shape engaged with the rack, the cutting member 110 may reciprocate in the groove processing direction F.

Meanwhile, when the chip having the triangular prism shape is generated through the above-mentioned process, the chip is separated from the plate material B and drops downwardly. In order to easily process the chip, or the like, the rotating body 132 according to the present embodiment is positioned under the plate material B described above as shown in FIGS. 2 to 5, and a central portion of the rotating body 132 is penetrated downwardly. When the rotating body 132 is configured as described above, the removed chips may be collected in a predetermined direction through the central portion of the rotating body 132. In addition, when a box for collecting the chips is provided at a lower portion of the rotating body 132, the generated chips may be easily removed after the cutting process ends.

In addition, the groove processing apparatus according to the present embodiment may further include a support part 180 in order to stably support the plate material B during a process of cutting the plate material B and guide the plate material B in a predetermined direction, as shown in FIG. 1. The support part 180 may be configured to be movable together with the plate material B in a direction (a horizontal direction based on FIG. 4 or FIG. 5) vertical to the side of the plate material B. When the support part 180 is configured as described above, a depth of the groove G formed in the side of the plate material B may be controlled.

As a result, since the groove processing apparatus according to the present embodiment may process the groove G having various angles and a triangular cross section in the side of the plate material B including the flange part P, it may easily process a groove G having an optimal shape according to a bending angle of the plate material B in the side of the plate material B only with a single cutting member 110 and prevent light in a channel signboard from being leaked to the outside due to the groove G formed at the flange part P of the plate material B even in the case of bending the plate material B in order to form the channel signboard, or the like. That is, since the groove processing apparatus moves the cutting member 110 to the first or second position by the first driving part 130 and then cuts the side of the plate material B while moving the cutting member 110 in the groove processing direction F of the plate material by the second driving part 150 so as to correspond to the two sides S₁ and S₂ of the triangular shape described above, it may process a groove G having an angle in a range as all as possible and having a shape similar to the triangular prism in the side of the plate material B.

This advantage may be more effective particularly in the case in which the above-mentioned plate material B is made of a metal material having a thin band shape to thereby be continuously provided in a length direction. That is, for example, in the case of repeatedly bending the band shaped plate material B continuously provided in the length direction in order to form a side of the channel signboard, angles at which the plate material B is to be bent according to a shape of a letter, or the like, that is to be represented by the channel signboard can not but be various per a bending position of the plate material B. However, when the groove processing apparatus according to the present embodiment is used, the groove G having an optimal shape according to the bending angle may be continuously processed in the side of the plate material B. In addition, when the groove G having the optimal shape as described above is processed in the side of the plate material B including the flange part P, after the channel signboard, or the like, is completed, the light is not leaked through a gap between the flange parts P, such that a beautiful appearance of the channel signboard may be maintained.

Meanwhile, although the case in which the groove processing apparatus according to the present embodiment processes the groove G in the side of the metal plate material B having the thin band shape has been described in the present specification, the use of the groove processing apparatus according to the present embodiment is not limited thereto. That is, for example, in the case of processing a large groove having a triangular cross section in the side of the plate material having a thick thickness, when it is not easy to process the groove only with a single cutting tool, the groove processing apparatus according to the present embodiment is used, thereby making it possible to easily process the groove having the triangular shape in the side of the plate material having a thick thickness.

### Second Exemplary Embodiment

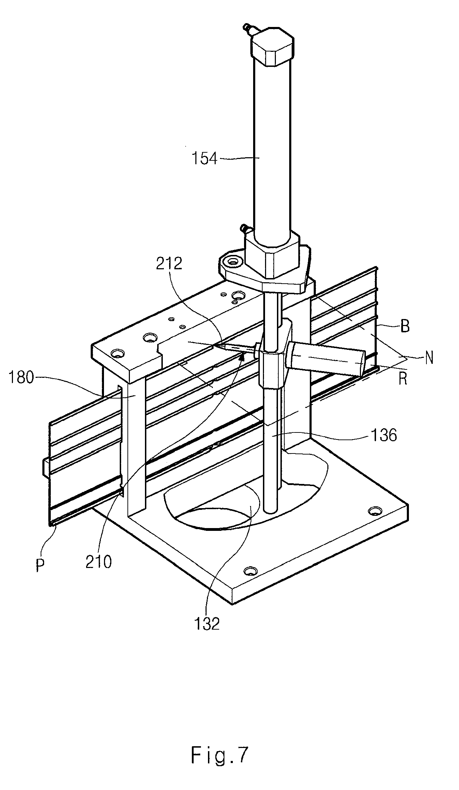

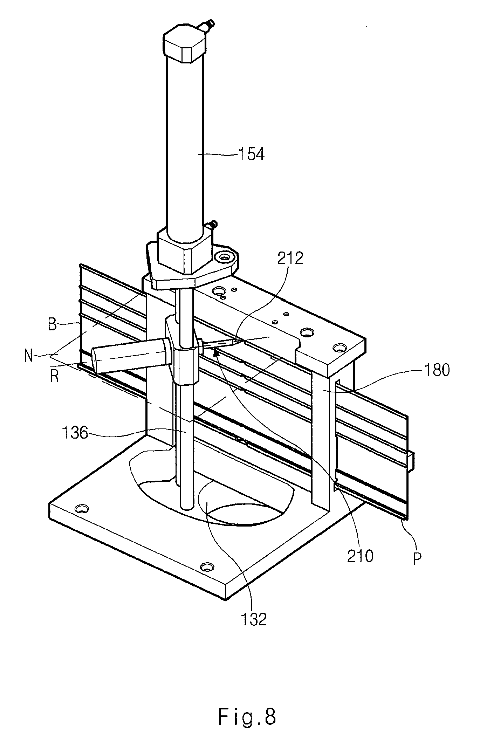

FIG. 7 is a perspective view showing components of a groove processing apparatus according to a second exemplary embodiment of the present invention when a cutting member is positioned at a first position; and FIG. 8 is a perspective view showing the components of the groove processing apparatus of FIG. 7 when the cutting member is positioned at a second position. The groove processing apparatus according to the present embodiment is mainly different in a cutting member from the groove processing apparatus according to the first exemplary embodiment of the present invention described above. Therefore, the cutting member will be mainly described. In addition, the same (corresponding) reference numerals will be used to describe the same (or corresponding) components as the above-mentioned components. In addition, a detailed description of the same components as the above-mentioned components will be omitted.

The groove processing apparatus according to the present embodiment includes a first driving part 130 moving a cutting member 210 to first and second positions and a second driving part 150 moving the cutting member 210 in the groove processing direction F of the plate material, similar to the groove processing apparatus according to the first exemplary embodiment of the present invention described above. However, the cutting member 210 cutting the side of the plate material B is different from the cutting member 110 according to the above-mentioned exemplary embodiment of the present invention. Describing this in detail, the cutting member 210 according to the present embodiment has a kind of spindle structure as shown in FIGS. 7 and 8. That is, the cutting member 210 according to the present embodiment includes a cutting blade 212 formed at a portion at which it contacts the plate material B and is rapidly rotated based on a shaft R present on a plane N perpendicular to the side of the plate material B to cut the side of the plate material B. When the shaft R of the cutting member 210 is positioned as described above, the cutting member may stably cut the side of the plate material B.

### Third Exemplary Embodiment

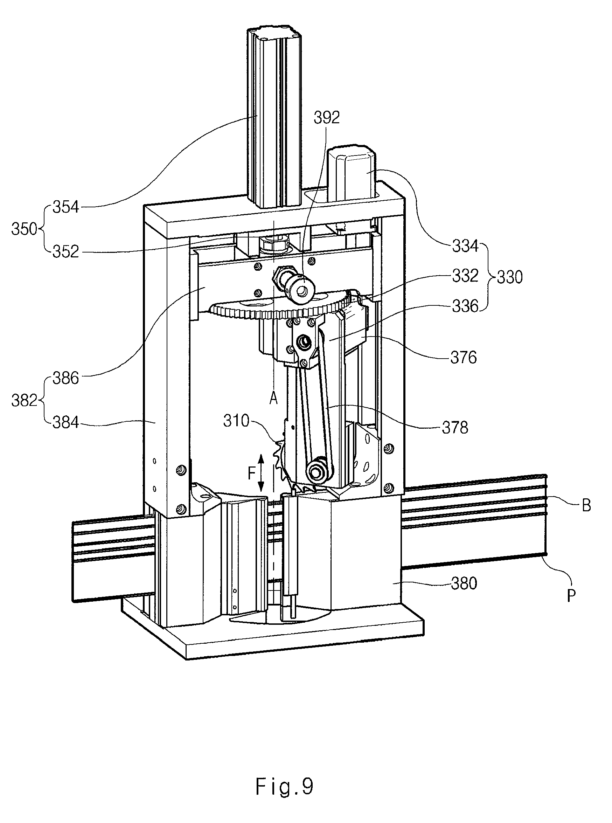

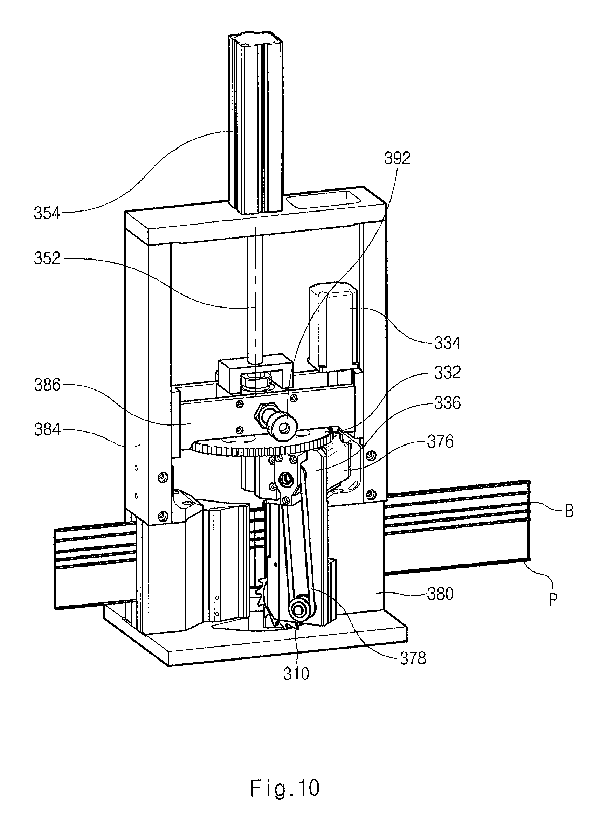

FIG. 9 is a perspective view of a groove processing apparatus according to a third exemplary embodiment of the present invention; and FIG. 10 to 12 are perspective views stepwise showing an operation structure of the groove processing apparatus of FIG. 9. For reference, the same (corresponding) reference numerals will be used to describe the same (or corresponding) components as the above-mentioned components. In addition, a detailed description of the same components as the above-mentioned components will be omitted. As shown in FIGS. 9 to 12, the groove processing apparatus according to the present embodiment may be configured to include a cutting member 310, a first driving part 330, and a second driving part 350.

The cutting member 310 includes a cutting blade formed in a circumferential direction to cut the side of the plate material B by rotation, similar to the cutting member 110 according to the first exemplary embodiment of the present invention described above. The groove processing apparatus according to the present embodiment is provided with a cutting member driving part 376 in order to rotate the cutting member 310. The cutting member driving part 376 may be provided at a connecting body 336 of the first driving part 330 as described below. In addition, rotational force generated by the cutting member driving part 376 may be transferred to the cutting member 310 through a belt 378 as shown in FIG. 9, or the like.

The cutting member 310 may move to first and second positions by the first driving part 330 and move in the groove processing direction F of the plate material by the second driving part 350. The movement of the cutting member 310 to the first and second positions and in the groove processing direction F of the plate material is to process the groove G having the triangular shape in the side of the plate material B including the flange part P, as described in the above-mentioned exemplary embodiment of the present invention. That is, when the side of the plate material B is cut in the groove processing direction F of the plate material so as to correspond to each of the two sides of the triangular shape having the same vertex as described above, the groove G having the triangular cross section may be formed in the side of the plate material B.

In order to perform this operation, the groove processing apparatus according to the present embodiment rotates the cutting member 310 around an axis A parallel with the groove processing direction F of the plate material by the first driving part 330 to move the cutting member 310 to the first and second positions. Here, in order to process the groove G having the triangular cross section through the cutting member 310, it is preferable that a distal end of the cutting member 310 toward the plate material B is extended at least up to the above-mentioned vertex and the axis A parallel with the groove processing direction F of the plate material is positioned on the above-mentioned vertex, as described in the first exemplary embodiment of the present invention. For reference, the axis A parallel with the groove processing direction F of the plate material may mean a tangible axis. However, in some cases, the axis A may simply mean an intangible axis indicating the rotation center of the cutting member 310.

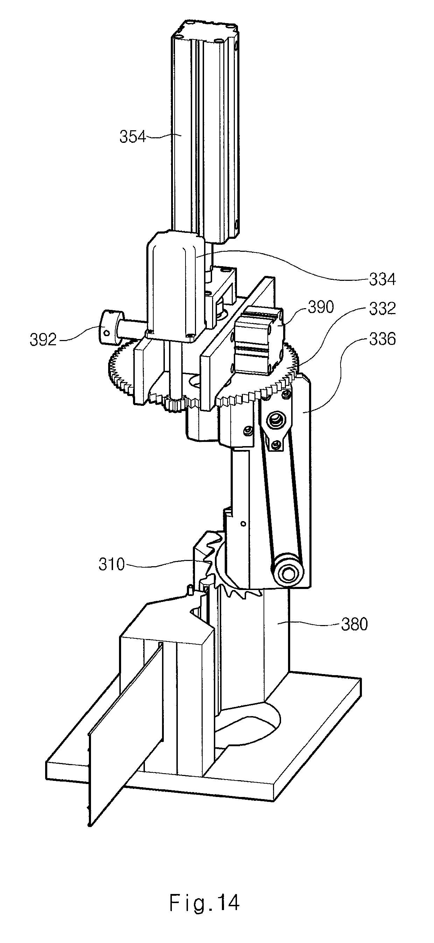

In addition, the first driving part 330 includes a rotating body 332, a driving body 334, and the connecting body 336 in order to implement the operation as described above. The rotating body 332 is rotated around the axis A parallel with the groove processing direction F of the plate material described above. In order to rotate the rotating body 332 as described above, the driving body 334 transfers rotational force to an outer surface of the rotating body 332 through engagement between gear teeth, as shown in FIG. 14 to be described below. This transfer of the rotational force may also be implemented by configuring the rotating body and the driving body in a pulley form and connecting the rotating body and the driving body to each other by a belt, in addition to the engagement between the gear teeth. Alternatively, the driving body may also be configured to directly rotate the rotating body at the center of the rotating body. In addition, the connecting body 336 connects the rotating body 332 and the cutting member 310 to each other. The rotating body 332 is rotated through this connection, such that the cutting member 310 may be rotated.

As described above, the cutting member 310 may move to the first or second position by the first driving part 330 and then move in the groove processing direction F of the plate material by the second driving part 350. The plate material B may be cut during the movement of the cutting member 310 by the second driving part 350. In order to implement this movement, the second driving part 350 may include a driving shaft 352 having one end portion directly or indirectly connected to the cutting member 310 and a driving shaft driving part 354 reciprocating the driving shaft 352 in the groove processing direction F of the plate material. The driving shaft 352 may be directly connected to the cutting member 310 or be indirectly connected thereto as shown in FIG. 9, or the like.

The groove processing apparatus according to the present embodiment may further include a support part 380 capable of stably supporting the plate material B during a process of cutting the plate material B and guiding the plate material B in a predetermined direction. In addition, an upper portion of the support part 380 may be provided with a guide part 382 capable of guiding the cutting member 310 in the groove processing direction. For reference, although the case in which the groove processing direction F is represented to be a vertical direction, such that the guide part 382 is provided over the support part 380 is shown in FIG. 9, or the like, a position of the guide part 382 may be changed according to a direction in which the groove G is formed. In addition, unlike the case shown in FIG. 9, or the like, the guide part 382 may also be provided under the support part 380 in some cases. In addition, the support part 380 and the guide part 382 may be separately manufactured and then coupled to each other, as shown in FIG. 9, or the like, or may be manufactured integrally with each other in some cases.

The guide part 382 may include a frame 384 provided over the support part 380 and a slider 386 moving along the frame 384 in the groove processing direction F of the plate material. In addition, the driving shaft driving part 354 of the second driving part 350 described above may be installed at the frame 384, and the driving shaft 352 of the second driving part 350 described above may have a lower end portion connected to an upper portion of the slider 386. Further, the rotating body 332 of the first driving part 330 described above may be rotatably connected to a lower portion of the slider 386. Through this configuration, when the driving shaft 352 moves upwardly or downwardly by the driving shaft driving part 354, the first driving part 330 and the cutting member 310 may also move upwardly or downwardly through the slider 386.

With the above-mentioned configuration, even though a separate support structure is not provided, since both of vertical movement and rotation of the cutting member 310 may be implemented, the entire configuration of the groove processing apparatus may be simplified. In addition, in order to make the entire configuration of the groove processing apparatus simpler, it is preferable to the cutting member driving part 376 driving the cutting member 310 also moves vertically together with the driving shaft 352 through the slider 386 according to vertical movement of the driving shaft 352, as shown in FIG. 9, or the like. As an example of this configuration, the cutting member driving part 376 may also be installed at the connecting body 336 of the first driving part 330, as shown in FIG. 9, or the like. That is, the cutting member driving part 376 is installed at the connecting body 336 and is connected to the cutting member 310 by the belt 378, such that the rotational force of the cutting member driving part 376 may be transferred to the cutting member 310 and the cutting member driving part 376 may move vertically and be rotated, together with the cutting member 310, or the like.

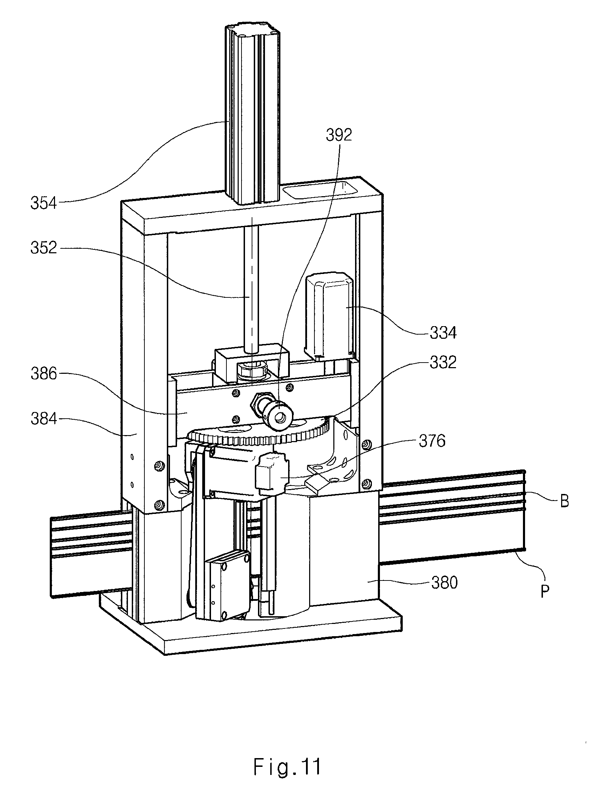

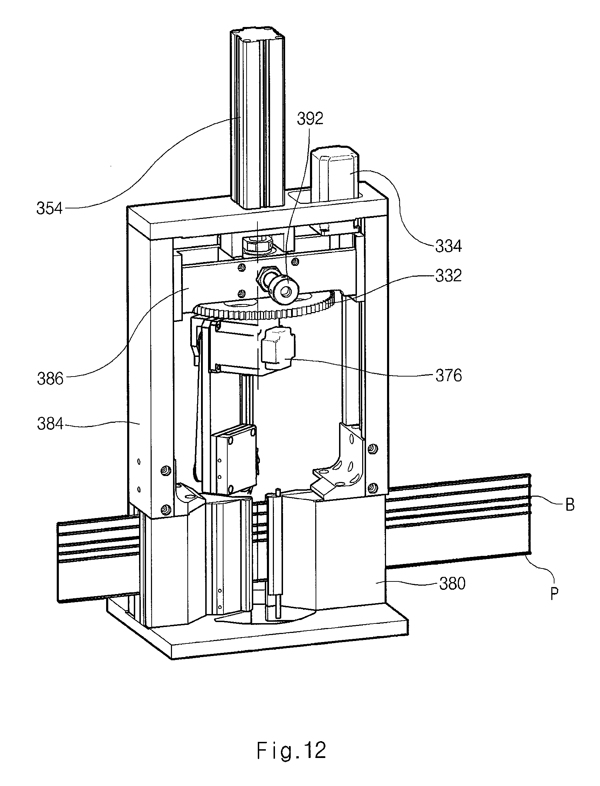

An operation structure of the groove processing apparatus according to the present embodiment having the configuration as described above will be described with reference to FIGS. 9 to 12. First, as shown in FIG. 9, the cutting member 310 moves to the first position by the first driving part 330, more specifically, by the rotation of the rotating body 332 through the driving body 334. Next, as shown in FIG. 10, the side of the plate material B is cut so as to correspond to any one of the two sides of the triangular shape while moving the cutting member 310 downwardly through the slider 386 by the second driving part 350, more specifically, by descent of the driving shaft 352 through the driving shaft driving part 354. Then, as shown in FIG. 11, the cutting member 310 moves to the second position by the first driving part 330. Finally, as shown in FIG. 12, the side of the plate material B is cut so as to correspond to the other of the two sides of the triangular shape while moving the cutting member 310 upwardly by the second driving part 350.

Unlike this, as described in the first exemplary embodiment of the present invention described above, the cutting member 310 may also reciprocate in the vertical direction at the first position and then reciprocate again in the vertical direction at the second position. However, at the time of the operation as described above, a problem may also occur due to a contact between the cutting member and the plate material during a process in which the cutting member 310 moves downwardly at the first position and then moves upwardly again at the first position. However, as shown in FIG. 9, or the like, when the cutting member having the cutting blade formed in the circumferential direction is used, the generation of the problem described above may be prevented.

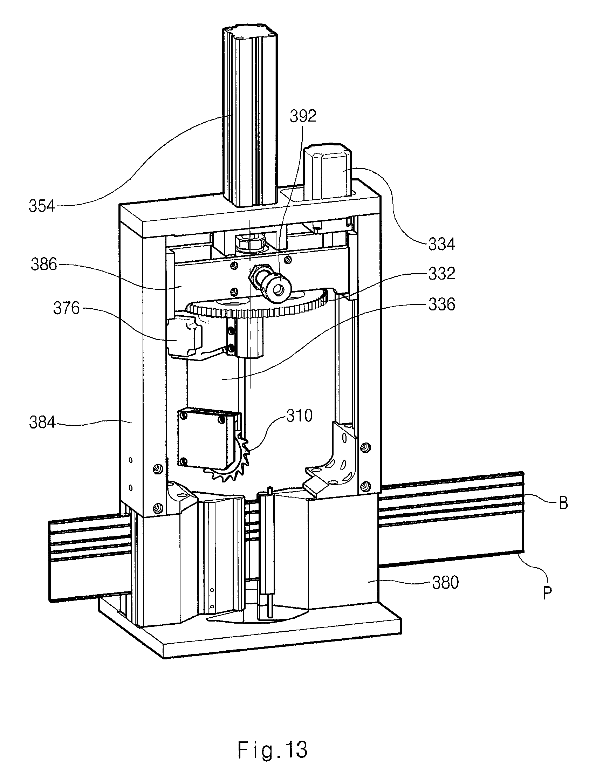

In addition, as shown in FIGS. 13 and 14, the groove processing apparatus according to the present embodiment may process the groove G in both sides of the plate material B by rotating the cutting member 310 by the first driving part 330. FIG. 13 is a perspective view describing a case in which the groove processing apparatus of FIG. 9 processes another side of a plate material; and FIG. 14 is a perspective view showing main components of the groove processing apparatus of FIG. 13. As shown in FIGS. 13 and 14, when the connecting body 336 of the first driving part 330 is configured to be rotated without interference by the plate material B by sufficiently securing a height of the frame 384, since the cutting member 310 may be positioned at any side of the plate material B through the rotation of the cutting member 310 by the first driving part 330, the groove G having the triangular cross section may be processed in any side of the plate material B.

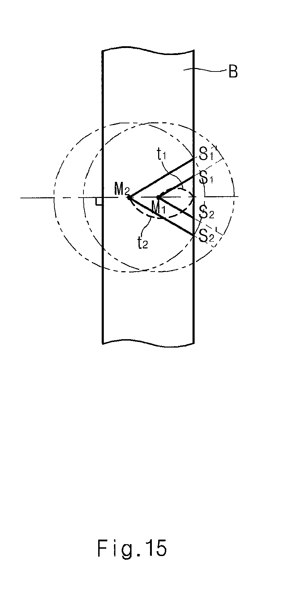

Meanwhile, the groove processing apparatus according to the present embodiment may further include a third driving part 390 controlling a depth of the groove G formed in the side of the plate material B, as shown in Fig. 14. The third driving part 390 moves the rotation center of the cutting member 310 in a direction (a horizontal direction based on FIG. 15) vertical to the side of the plate material B to control the depth of the groove G formed in the side of the plate material B. That is, as shown in FIG. 15, when each of the portions corresponding to the two sides S₁ and S₂ of the triangular shape is cut in the groove processing direction F of the plate material in a state in which the rotation center of the cutting member 310 is positioned at M₁, the groove G having a depth of t₁ may be formed in the plate material B. On the other hand, when each of the portions corresponding to the two sides S₁' and S₂' of the triangular shape is cut in the groove processing direction F of the plate material in a state in which the rotation center of the cutting member 310 is positioned at M₂, the groove G having a depth of t₂ may be formed in the plate material B. As a result, when the rotation center of the cutting member 310 moves in the direction vertical to the side of the plate material B, a distance between the cutting member 310 and the side of the plate material B (more specifically, a distance between the distal end of the cutting member toward the plate material and one point inside the plate material) may be controlled. The distance is controlled as described above, thereby making it possible to control the depth of the groove G formed in the side of the plate material B.

In order to control the depth as described above, the third driving part 390 may be configured to move the above-mentioned rotating body 332 in the direction vertical to the side of the plate material B, as shown in FIG. 14. More specifically, when the third driving part 390 is configured to push or pull the rotation center of the rotating body 332 in a predetermined direction through a piston, or the like, and the rotating body 332 is configured to be movable in a predetermined direction in the slider 386, the rotation center of the rotating body 332, that is, the rotation center of the cutting member 310 may move in the direction vertical to the side of the plate material B according to the movement of the piston. Since the movement of the rotating body 332 needs to be limited in an appropriate range, the groove processing apparatus according to the present embodiment may further include a stopper 392 limiting the movement of the rotating body 332 by the third driving part 390, as shown in FIG. 14, or the like.

Although the preferred embodiments of the present invention have been disclosed for illustrative purposes, those skilled in the art will appreciate that various modifications, additions and substitutions are possible, without departing from the scope and spirit of the invention as disclosed in the accompanying claims. Accordingly, such modifications, additions and substitutions should also be understood to fall within the scope of the present invention. Therefore, the scope and spirit of the present invention should be understood only by the following claims, and all of equivalences and equivalent modifications to the claims are intended to fall within the scope and spirit of the present invention.

### [Industrial Applicability]

According to the exemplary embodiments of the present invention, the groove processing apparatus capable of processing the groove having various angles and the triangular cross section in the side of the plate material only with a single cutting member may be provided.

## Claims

1. A groove processing apparatus of processing a groove having a triangular cross section in a side of a plate material, the groove processing apparatus comprising:
a cutting member cutting the side of the plate material;
a first driving part moving the cutting member to first and second positions; and
a second driving part moving the cutting member in groove processing directions of the plate material,
wherein the first position corresponds to any one of the two sides of the triangular shape having the same vertex and the second position corresponds to the other thereof, the vertex being positioned inside the plate material.

2. The groove processing apparatus according to claim 1, wherein the cutting member cuts the side of the plate material so as to correspond to any one of the two sides of the triangular shape during a process in which it moves in the groove processing directions of the plate material by the second driving part, and the second driving part reciprocates the cutting member in the groove processing directions of the plate material at the first position and reciprocates the cutting member in the groove processing directions of the plate material at the second position or moves the cutting member in any one of the groove processing directions of the plate material at the first position and moves the cutting member in the other direction of the groove processing directions of the plate material at the second position.

3. The groove processing apparatus according to claim 1, wherein the second driving part includes a driving shaft having one end portion directly or indirectly connected to the cutting member and a driving shaft driving part reciprocating the driving shaft in the groove processing direction of the plate material.

4. The groove processing apparatus according to claim 1, wherein the first driving part rotates the cutting member based on the rotation center present on an extension line of the vertex to move the cutting member to the first and second positions.

5. The groove processing apparatus according to claim 4, wherein the first driving part includes a rotating body rotated based on the rotation center present on the extension line of the vertex, a driving body transferring rotational force to an outer surface of the rotating body to rotate the rotating body, and a connecting shaft directly or indirectly connecting the rotating body and the cutting member to each other, and the cutting member is rotated together with the connecting shaft according to the rotation of the rotating body.

6. A groove processing apparatus of processing a groove having a triangular cross section in a side of a plate material, the groove processing apparatus comprising:
a cutting member cutting the side of the plate material;
a first driving part rotating the cutting member around an axis parallel to groove processing directions of the plate material; and
a second driving part moving the cutting member in the groove processing directions of the plate material,
wherein the first driving part moves the cutting member to first and second positions corresponding to two sides of the triangular shape having the same vertex, and the cutting member cuts the side of the plate material while moving in the groove processing directions of the plate material by the second driving part at the first and second positions.

7. The groove processing apparatus according to claim 6, wherein the first driving part includes a rotating body rotated around the axis parallel with the groove processing directions of the plate material, a driving body rotating the rotating body, and a connecting body connecting the rotating body and the cutting member to each other and rotated together with the rotating body.

8. The groove processing apparatus according to claim 6, further comprising a support part guiding the plate material in a predetermined direction and supporting the plate material during a process of cutting the plate material; and a guide part provided at one side of the support part to guide the movement of the cutting member in the groove processing directions.

9. The groove processing apparatus according to claim 8, wherein the guide part includes a frame provided at one side the support part and a slider moving along the frame in the groove processing direction of the plate material, the first driving part includes a rotating body connected to the slider and rotated based on the axis parallel to groove processing directions of the plate material and a connecting body connecting the rotating body and the cutting member to each other and rotated together with the rotating body and is movable together with the slider in the groove processing directions of the plate material, and the second driving part includes a driving shaft having one end portion connected to the slider and a driving shaft driving part installed at the frame to reciprocate the driving shaft in the groove processing directions of the plate material.

10. The groove processing apparatus according to claim 9, further comprising a cutting member driving part provided at the connecting body to move together with the connecting body and driving the cutting member.

11. The groove processing apparatus according to claim 6, further comprising a third driving part moving the rotation center of the cutting member in a direction vertical to the side of the plate material to control a depth of the groove formed in the side of the plate material.
